(19) Europäisches Patentamt / European Patent Office / Office européen des brevets

(11) EP 3 724 720 B1

(12) **EUROPÄISCHE PATENTSCHRIFT**

(45) Veröffentlichungstag und Bekanntmachung des Hinweises auf die Patenterteilung:
**21.06.2023 Patentblatt 2023/25**

(21) Anmeldenummer: **18814889.4**

(22) Anmeldetag: **05.12.2018**

(51) Internationale Patentklassifikation (IPC):
**G02F 1/39** (2006.01)   **G02F 1/35** (2006.01)

(52) Gemeinsame Patentklassifikation (CPC):
**G02F 1/39; G02F 1/395;** G02F 1/3542; G02F 1/392;
G02F 2201/02; G02F 2203/15; H01S 3/06791;
H01S 3/094026; H01S 3/10046; H01S 3/1112

(86) Internationale Anmeldenummer:
**PCT/EP2018/083632**

(87) Internationale Veröffentlichungsnummer:
**WO 2019/115310 (20.06.2019 Gazette 2019/25)**

(54) **ULTRAKURZ-IMPULSLASERSYSTEM MIT SCHNELL ABSTIMMBARER ZENTRALWELLENLÄNGE**

ULTRASHORT PULSE LASER SYSTEM HAVING A QUICKLY TUNABLE CENTRAL WAVELENGTH

SYSTÈME LASER À IMPULSIONS ULTRACOURTES DOTÉ D'UNE LONGUEUR D'ONDE CENTRALE RAPIDEMENT ACCORDABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2017 DE 102017129637**

(43) Veröffentlichungstag der Anmeldung:
**21.10.2020 Patentblatt 2020/43**

(73) Patentinhaber: **Refined Laser Systems GmbH 48149 Münster (DE)**

(72) Erfinder:
- **BRINKMANN, Maximilian 48153 Münster (DE)**
- **FALLNICH, Carsten 31275 Lehrte (DE)**
- **HELLWIG, Tim 48149 Münster (DE)**

(74) Vertreter: **Harrison, Robert John et al Sonnenberg Harrison Partnerschaft mbB Herzogspitalstraße 10a 80331 München (DE)**

(56) Entgegenhaltungen:
US-A1- 2015 015 938

- **GOTTSCHALL THOMAS ET AL: "Four-wave mixing based light sources for real-world biomedical applications of coherent Raman microscopy", PROGRESS IN BIOMEDICAL OPTICS AND IMAGING, SPIE - INTERNATIONAL SOCIETY FOR OPTICAL ENGINEERING, BELLINGHAM, WA, US, Bd. 9712, 14. März 2016 (2016-03-14), Seiten 971202-971202, XP060064780, ISSN: 1605-7422, DOI: 10.1117/12.2212213 ISBN: 978-1-5106-0027-0**
- **SHENPING LI ET AL: "Electrical wavelength-tunable actively mode-locked fiber ring laser with a linearly chirped fiber Bragg grating", IEEE PHOTONICS TECHNOLOGY LETTERS, IEEE SERVICE CENTER, PISCATAWAY, NJ, US, Bd. 10, Nr. 6, 1. Juni 1998 (1998-06-01), Seiten 799-801, XP011431488, ISSN: 1041-1135, DOI: 10.1109/68.681488**
- **MAXIMILIAN BRINKMANN ET AL: "Electronically and rapidly tunable fiber-integrable optical parametric oscillator for nonlinear microscopy", OPTICS LETTERS, Bd. 41, Nr. 10, 15. Mai 2016 (2016-05-15), Seite 2193, XP055448702, US ISSN: 0146-9592, DOI: 10.1364/OL.41.002193**
- **MAXIMILIAN BRINKMANN ET AL: "Optical parametric chirped pulse oscillation", OPTICS EXPRESS, Bd. 25, Nr. 11, 29. Mai 2017 (2017-05-29), Seite 12884, XP055557349, US ISSN: 2161-2072, DOI: 10.1364/OE.25.012884**

**Beschreibung**

Die vorliegende Erfindung betrifft ein System und ein Verfahren zur Erzeugung von in der Wellenlänge abstimmbaren Laser-Ausgangsimpulsen unter Verwendung parametrischer Prozesse, wobei durch eine gleichzeitige und abgestimmte Verstimmung der Pumpimpuls-Wellenlänge und -Repetitionsrate eine zeitliche Überlappung zwischen Pump- und Seedimpulsen in einem parametrischen Verstärkungsmedium gewährleistet wird. Auf Basis dieser Parameterkopplung lassen sich Laser mit einem weit abstimmbaren Wellenlängenbereich erhalten, welche vollständig faserbasiert ausgeführt werden können und welche sich durch ein besonders schnelles Ansprechverhalten auch für die moderne nichtlineare oder Fluoreszenzbasierte-Mikroskopie eignen.

In den letzten Jahrzehnten haben verbesserte Analysemethoden immer umfangreichere Charakterisierungen von Proben aller Art ermöglicht und zu einem tiefen Verständnis z.B. der Strukturen und Reaktionsmechanismen biologischer Systemen beigetragen. Zu den meist genutzten Analysemethoden zählen insbesondere spektroskopische Methoden, welche, zumindest prinzipiell, in der Lage sind, in Echtzeit mit einer Ortsauflösung im SubmikrometerBereich selbst größere Strukturen und Reaktionsabläufe in Proben aufzulösen. Als Unterklasse eignen sich dabei insbesondere lasergestützte Verfahren, wie beispielsweise die Multiphotonen-Mikroskopie (MPM) und insbesondere auch die nichtlineare kohärente Raman-Spektroskopie (CRS), da diese im optimalen Fall das Verhalten von Molekülen in ihrer "natürlichen" chemischen Umgebung ohne zusätzliche Anfärbung abbilden können. Die Grundlage dieser modernen Methoden bildet dabei die Weiterentwicklung in der Lasertechnik, welche gerade in den letzten Jahren dazu geführt hat, dass neben den grundsätzlichen Vorzügen des Laserlichtes nun auch mit einem einzigen Laseraufbau flexible Experimente, beispielsweise bei unterschiedlichen Wellenlängen, durchgeführt werden können. Bedingt durch die Komplexität der am Markt erhältlichen Geräte und den damit verbundenen Kosten für Anschaffung und Wartung, ist ein Großteil dieser Anwendungen zurzeit jedoch noch auf spezialisierte Labore beschränkt. Um diese Techniken massentauglich zu machen und eine weitere Flexibilisierung der durchführbaren Experimente zu ermöglichen, ist eine Transformation in einfache, wartungsarme und robuste, beispielsweise faserbasierte Aufbauten notwendig.

Bekannt sind Lasersysteme, die eine Verstimmung der Ausgangswellenlänge durch eine Änderung der Repetitionsrate erreichen (beispielsweise Shenping L. et al. in "Electrical wavelength-tunable actively mode-locked fiber ring laser with a linearly chirped fiber Bragg grating. IEEE Photonics Technology Letters" 10, 799-801 (1998)). In diesem Aufbau wird die Repetitionsrate aber nur als Parameter zur Verstimmung der Wellenlänge des Pumplasers betrachtet. Der genaue Wert der Repetitionsrate ist nicht weiter von Interesse, und es wird nur eine kleine Wellenlängenänderung des Pumplasers erhalten, welche auf die Verstärkungsbereiche existierender Lasermaterialien beschränkt ist. Eine Verwendung im Zusammenhang mit parametrischen Verstärkersystemen wird nicht offenbart.

Eine Möglichkeit zum schnellen Verändern der Wellenlänge faserintegrierter parametrischer Oszillatoren (FOPOs) ist beispielsweise in Brinkmann, M. et al. "Electronically and rapidly tunable fiber-integrable optical parametric oscillator for nonlinear microscopy" Optics Letters, 41, 2193, (2016)" beschrieben. Die Änderung der Wellenlänge wird durch die Verwendung eines dispersiven Filters im FOPO und ein Abstimmen der Repetitionsrate des Pumplasers erhalten. Der Nachteil dieser technischen Lösung ist jedoch, dass das parametrische Verstärkungsspektrum alle zu erzeugenden Wellenlängen gleichzeitig bei einer festen Pumpwellenlänge bereitstellen muss. Dies bedeutet, dass das Pumpen nahe der Nulldispersionswellenlänge des parametrischen Verstärkers erfolgt. Entsprechend limitiert ist die maximal erreichbare Durchstimmbarkeit (1100 nm bis 1300 nm für den Idlerimpuls). Ein weiterer Nachteil der verwendeten Methode ist die notwendige hohe Pumpimpulsspitzenleistung (ca. 5 kW) um einen breiten Verstärkungsbereich zu erreichen. Pumpimpulse mit einer derart hohen Spitzenleistung erschweren in der Praxis die Faserintegration der Zuleitung der Pumpimpulse bis zum parametrischen Verstärkungsmedium durch pulsverändernde nichtlineare Effekte erheblich.

Der Durchstimmbereich eines FOPOs kann erweitert werden, indem zusätzlich die Wellenlänge der Pumpimpulse leicht verstimmt wird. In diesem Fall wird eine kleine Änderung der Pumpimpulswellenlänge durch eine steile Phasenanpassungskurve des parametrischen Verstärkungsmediums in eine große Wellenlängenänderung der FOPO-Ausgangsimpulse übersetzt. Dieses Prinzip wurde z.B. in T. Gottschall et al. "Four-wave mixing based light sources for real-world biomedical applications of coherent Raman microscopy" (Proc. of SPIE, Vol. 9712, p. 971202, 2016) verwendet. Nachteil dieser Technik ist, dass zum Verstimmen der FOPO-Wellenlänge, sowohl die Wellenlänge der Pumpimpulse verstimmt werden muss, als auch die Repetitionsrate der Pumpimpulse, um den zeitlichen Überlapp zwischen Pump- und Seedimpulsen im Verstärkungsmedium festzuhalten. Aus diesem Grund ist in bekannten Systemen stets die unabhängige Kontrolle zweier Parameter (Repetitionsrate und Zentralwellenlänge der Pumpimpulse) notwendig, was einen erhöhten Material- und regelungstechnischen Aufwand nach sich zieht. Da diese benötigten Regelkreise typischerweise auf mechanischen Verzögerungsstrecken oder Temperaturänderungen basieren, können bekannte Systeme nur auf relativ langsamen Zeitskalen (über 100ms) verstimmt werden. Des Weiteren ist an bekannten Systemen nachteilig, dass typische Ausgestaltungen keine vollständige Integration in robuste Glasfasertechnik erlauben, was einen erfolgreichen, kosteneffizienten und wartungsarmen Einsatz außerhalb spezialisierter Laserlabore erheblich erschwert oder sogar verhindert.

Es ist daher die Aufgabe der vorliegenden Erfindung ein flexibles und prinzipiell ohne mechanische Verzögerungsstrecken oder Temperaturabstimmung ausführbares Lasersystem zu offenbaren, in welchem die Ausgangswellenlänge sehr schnell und in einem weiten Bereich durchstimmbar ist. Es ist weiterhin die Aufgabe der vorliegenden Erfindung ein Verfahren zur schnellen Durchstimmung von Laser-Ausgangswellen zu offenbaren.

Erfindungsgemäß ist ein System zur Erzeugung von Laserimpulsen variabler Wellenlänge, welches mindestens umfasst:

- einen Pumpimpulsgenerator zur Erzeugung von Pumpimpulsen und
- ein durch den Pumpimpulsgenerator gepumptes, optisch parametrisches Verstärkungsmedium, welches einfallende Pumpimpulse, stimuliert durch weitere Seedimpulse, in wellenängenverschobene Signal- und Idlerimpulse umwandelt, wobei die Wellenlänge der Pumpimpulse entweder als solche oder aber auch über die Repetitionsrate des Pumpimpulsgenerators einstellbar ist und bei einer Änderung entweder der Repetitionsrate oder der Wellenlänge sich der jeweils andere Parameter gleichzeitig so ändert, dass Pump- und Seedimpulse im optisch parametrischen Verstärkungsmedium zeitlich überlappen. Überraschenderweise hat sich gezeigt, dass mittels des erfindungsgemäß aufgebauten Lasersystems sich Laserimpulse generieren lassen, welche über einen großen Wellenlängenbereich abgestimmt werden können und wobei insbesondere der Wechsel zwischen unterschiedlichen Wellenlängen innerhalb einer sehr kurzen Zeitskala erfolgt. Es sind beispielsweise parametrische Lasersysteme erhältlich, welche sich leicht in faserintegrierter Bauweise aufbauen lassen und schnell (beispielsweise <100 ms) elektronisch verstimmbar sind. Die Abstimmbarkeit des Systems kann beispielsweise mehr als 2000 cm$^{-1}$ bzw. 70 THz betragen, und es lassen sich effiziente Systeme mit geringer Pumpimpulsspitzenleistung, beispielsweise kleiner als 5 kW oder sogar kleiner als 1 kW realisieren. Diese Flexibilität wird dabei insbesondere durch den erfindungsgemäßen Aufbau aus Pumpimpulsgenerator mit zusätzlichem optisch parametrischen Verstärkungsmedium erreicht, wobei insbesondere auch die Variabilität in den Pumpwellenlängen zu einer deutlich effizienteren und höheren Aufspreizung der Ausgangswellenlängen beitragen kann. Des Weiteren ist der Aufbau auch so flexibel, dass zwischen Pumpimpulsgenerator und parametrischem Verstärkungsmedium der Einsatz weiterer optischer Komponenten oder Systeme zur Anpassung von Leistung, zeitlicher Dauer, spektraler Breite und Form der Pumpimpulse möglich ist. Hierzu wird genutzt, dass Laserimpulse mit einer Zentralwellenlänge außerhalb der Verstärkungsbereiche klassischer Lasermaterialien mittels parametrischer Verstärkersysteme, unterteilt in optisch parametrische Verstärker und optisch parametrische Oszillatoren, erzeugt werden können. Die parametrischen Verstärkersysteme wandeln zuvor durch einen Pumplaser erzeugte Pumpimpulse, stimuliert durch weitere Seedimpulse, in wellenängenverschobene Signal- und Idlerimpulse um. Wichtige Voraussetzung dafür ist ein zeitlicher Überlapp der Seedimpulse mit den Pumpimpulsen im parametrischen Verstärkungsmedium.

Dies steht im Gegensatz zu den im Stand der Technik bekannten Systemen, welche entweder nur sehr kleine Wellenlängenänderungen zulassen oder in welchen der Wechsel zwischen unterschiedlichen Wellenlängen auf einer Zeitskala erfolgt (> 100 ms bis einige Sekunden), welche für die moderne Hochleistungsspektroskopie, z.B. in der modernen nichtlinearen oder Fluoreszenzbasierten-Mikroskopie, ungeeignet ist. Zudem ist in diesen bekannten Systemen stets die unabhängige Kontrolle zweier Parameter (Repetitionsrate und Zentralwellenlänge) notwendig, was einen erhöhten Material- und regelungstechnischen Aufwand nach sich zieht. An den bekannten Systemen ist weiterhin nachteilig, dass typische Ausgestaltungen keine vollständige Integration in robuste Glasfasertechnik erlauben, was einen erfolgreichen, kosteneffizienten und wartungsarmen Einsatz außerhalb spezialisierter Laserlabore erheblich erschwert oder sogar verhindert.

Das erfindungsgemäße System erzeugt Laserimpulse variabler Wellenlänge. Dies bedeutet, dass das System nicht nur Laserimpulse einer festen oder bei der Ausgabe eines Wellenlängenbereiches nur einer einzelnen Zentralwellenlänge bereitstellen kann, sondern dass Laserimpulse unterschiedlicher Wellenlänge oder Zentralwellenlänge bereitgestellt werden können. Im Folgenden wird der Begriff Wellenlänge synonym für die Zentralwellenlänge benutzt, wenn das betreffende Lasersystem einen Wellenlängenbereich ausgibt. Insbesondere durch das erfindungsgemäße, abstimmbare System aus Pumpimpulsgenerator und optisch parametrischem Verstärkungsmedium können beispielsweise unterschiedliche Ausgangslaserimpulse bereitgestellt werden, welche Wellenlängenunterschiede von bis zu einigen hundert Nanometer aufweisen.

Der Pumpimpulsgenerator erzeugt die Pumpimpulse, welche in das optisch parametrische Verstärkungsmedium geleitet werden. Der Pumpimpulsgenerator kann Laserimpulse unterschiedlicher Wellenlänge und mit unterschiedlicher Repetitionsrate bereitstellen, wobei entweder eine Steuerung der Repetitionsrate oder der Wellenlänge vorgesehen ist. Der Pumpimpulsgenerator kann eine oder mehrere optische Verstärkerketten und ein oder mehrere spektrale Filter aufweisen oder beinhalten. Bei einem erfindungsgemäß einsetzbaren Pumpimpulsgenerator kann es sich beispielsweise um einen passiv modenkoppelten Pumpimpulsgenerator, wie beispielsweise einen modengekoppelten Faserlaser, handeln. Zusätzlich ist es auch möglich, aus dem Pumpimpulsgenerator einen Teil der Leistung zur Erzeugung der Seedimpulse auszukoppeln.

Das optisch parametrische Verstärkungsmedium kann sowohl in optisch parametrischen Oszillatoren (OPOs) oder aber auch in optisch parametrischen Verstärkern (OPAs) eingesetzt werden. Besonders bevorzugt können diese Systeme faserbasiert sein (FOPO, FOPA). Das optisch parametrische Verstärkungsmedium zeichnet sich dadurch aus, dass die einfallenden Pumpimpulse, stimuliert durch weitere Seedimpulse, in wellenlängenverschobene Signal- und Idlerimpulse umgewandelt werden. Die Wellenlängen der ausgegebenen Wellen und somit die Umwandlung im optisch parametrischen Verstärkungsmedium erfolgt dabei nach den bekannten Beziehungen (Energieerhaltung und Phasenanpassung) der nichtlinearen Optik.

Die Wellenlänge der Pumpimpulse, welche den Pumpimpulsgenerator verlassen, kann sowohl als solche als auch über die Repetitionsrate des Pumpimpulsgenerators eingestellt werden. Die erfindungsgemäß einsetzbaren Pumpimpulsgeneratoren sind also in der Lage, Pumpimpulse mit einer Wellenlänge innerhalb eines gewissen Bereiches bereitzustellen, wobei die Einstellung der Wellenlänge der ausgekoppelten Laserimpulse unabhängig entweder über die Repetitionsrate der Pumpimpulse, z.B. durch eine elektrooptische Modulation bei der gewünschten Repetitionsrate oder aber auch über die Wellenlänge als solche, z.B. durch einen elektrisch einstellbaren Wellenlängenfilter, erfolgen kann.

Erfolgt eine Wellenlängenänderung des Pumpimpulses entweder gesteuert über die Repetitionsrate oder aber direkt, so erfolgt erfindungsgemäß gleichzeitig eine Änderung des jeweils anderen Parameters. Die Anpassung des einen Parameters erfolgt also unmittelbar und simultan zur Änderung des anderen Parameters. Dadurch wird erreicht, dass nach einer Wellenlängenänderung das System sich sehr schnell auf die neue Wellenlänge anpasst und die volle Impulsleistung zur Verfügung gestellt werden kann. Dies steht im Gegensatz zu aus dem Stand der Technik bekannten Systemen, in denen eine Anpassung nicht simultan/gleichzeitig, sondern konsekutiv, beispielsweise über das Einstellen eines Filters und anschließender Längenänderung des Resonators, erfolgt.

Über die gleichzeitige Änderung der Wellenlänge und der Repetitionsrate wird erreicht, dass Pump- und Seedimpulse im optisch parametrischen Verstärkungsmedium zeitlich überlappen. Die Überlappung der beiden Impulse führt zu einer optimalen Verstärkung im parametrischen Verstärkungsmedium, und es können nach der Änderung der Wellenlänge innerhalb sehr kurzer Zeiten wieder hohe Ausgangsleistungen bereitgestellt werden. Eine zeitliche Überlappung der Pump- und der Seedimpulse ergibt sich dann, wenn innerhalb desselben Zeitintervalls sowohl Pump- wie auch Seedimpulse einen gemeinsamen Beitrag zu der Leistung der Ausgangimpulse des Lasersystems leisten.

In einer bevorzugten Ausgestaltung des Systems kann die gleichzeitige Änderung der Repetitionsrate bei Änderung der Wellenlänge oder die gleichzeitige Änderung der Wellenlänge bei Änderung der Repetitionsrate des Pumpimpulsgenerators über ein zusätzliches optisch dispersives Element erfolgen. Über das zusätzliche optisch dispersive Element lässt sich das System so ausgestalten, dass eine simultane und gleichzeitige Anpassung von Repetitionsrate und Wellenlänge erreicht wird. Unter optisch dispersiven Elementen werden dabei diejenigen Elemente verstanden, welche prinzipiell in der Lage sind, Lichtwellen als Funktion ihrer Wellenlänge eine andere Ausbreitungsgeschwindigkeit (Phasengeschwindigkeit) zu geben. Des Weiteren kann es vorteilhaft sein, den Betrag der Dispersion nachträglich noch fein einstellen zu können, um eine besonders gute Anpassung der Ankunftszeit von Pump- und Seedimpuls im parametrischen Verstärkungsmedium für alle zu verstärkenden Wellenlängen zu erreichen.

Der Betrag der Dispersion des dispersiven Elements kann sich zweckmäßigerweise aus den unterschiedlichen Gruppengeschwindigkeiten von Impulsen unterschiedlicher Wellenlänge ergeben. Die Dispersion hat zur Folge, dass bei einem Abstimmen, d.h. Ändern der Pumpwellenlänge und zugehöriger Seedwellenlänge, ein für ein Paar von Pump- und Seedwellenlängen einmalig eingestellter Überlapp in der Regel nicht erhalten bleibt:
Die Umlaufzeit $\tau(\omega)$, bzw. die Repetitionsrate $R=1/\tau$ in einem Pumpimpulsgenerator lässt sich über die Gruppengeschwindigkeit $\nu_g(\omega)$ bzw. die Gruppenverzögerung pro Länge $\beta_1(\omega)=1/\nu_g$ und die Längen L der verwendeten Komponenten für jede Frequenz berechnen:

$$\tau(\omega) = \sum_i \beta_1^i L_i .$$

So verkürzt sich beispielsweise für eine Änderung der Wellenlänge von 1020 nm zu 1050 nm in einem typischen Pumpimpulsgenerator basierend auf einem Ytterbium-Faserlaser mit einer Wiederholrate von ca. 10 MHz die Umlaufzeit um etwa 3 ps was einer Änderung der Wiederholrate von etwa 3 kHz entspricht. Erfolgt z.B. die Erzeugung und Verstärkung der Seedstrahlung in einem typischen optisch parametrischen Oszillator (OPO) ebenfalls auf Glasfaserbasis (parametrisches Verstärkungsmedium z.B. NKT Photonics LMA-PM-5) verkürzt sich allerdings die Umlaufzeit zwischen den zu den jeweiligen Pumpwellenlängen gehörenden Seedwellenlängen von 749 nm und 930 nm unter anderem aufgrund der größeren Wellenlängenänderung deutlich mehr und zwar um etwa 400 ps. Ein bestehender zeitlicher Überlapp zusammengehöriger Pump- und Seedimpulse kann also für Pumpimpulse einer zeitlichen Dauer t « 400 ps ohne eine Änderung der Umlaufzeit im Pumpimpulsgenerator oder OPO (z.B. durch Änderung der Länge L) beim Abstimmen der Wellenlänge nicht aufrechterhalten werden. In oben angegebenen Beispiel müsste etwa die Länge des Pumpimpulsgenerators, z.B. über mechanische Verzögerungsschienen, um ca. 12 cm verkürzt werden.

Es lässt sich allgemein eine frequenzabhängige Fehlanpassung $\Delta\tau$ des zeitlichen Abstands zwischen zugehörigen Seed- und Pumpimpulsen definieren:

$$\Delta\tau(\omega_p) = \tau^{Seed}(\omega_s(\omega_p)) - \tau^{Pumpe}(\omega_p).$$

Diese Fehlanpassung wird erfindungsgemäß durch ein zusätzliches Element mit geeignet gewählter Dispersion kompensiert, bevorzugter Weise im Pumpimpulsgenerator. Eine mathematische Berechnung der benötigten Menge zusätzlicher Dispersion kann sich zweckmäßigerweise durch eine Taylorentwicklung der Fehlanpassung $\Delta\tau$ um die Pumpwellenlänge $\omega_0$ ergeben:

$$\Delta\tau(\omega_p) \approx \tau_0 + \tau_1(\omega_p - \omega_0) + \frac{\tau_2}{2}(\omega_p - \omega_0)^2 + ...$$

Die Dispersion des zusätzlichen dispersiven Elementes der Länge $L$ kann nach dieser Abschätzung zweckmäßiger Weise mit $\beta_2 * L = \tau_1$, $\beta_3 * L = \tau_2$ usw. gewählt werden. Typischerweise reicht eine Entwicklung der Fehlanpassung $\Delta\tau$ bis zur zweiten Ordnung und eine darauf basierende Kontrolle der Dispersion bis zur dritten Ordnung $\beta_3$ aus, um für eine ausreichende Kompensation zu sorgen. Es kann aber auch vorteilhaft sein, höhere Ordnungen zu kompensieren. So kann eine schnelle Verstimmung des Lasersystems über einen besonders weiten Bereich ermöglicht werden.

Innerhalb einer bevorzugten Ausführungsform des Systems kann das zusätzliche optisch dispersive Element aus der Gruppe bestehend aus gechirpten Bragg-Strukturen, Gitter, Prismen oder Kombinationen daraus ausgewählt sein. Insbesondere diese Gruppe an optisch dispersiven Elementen hat sich als besonders effizient erwiesen, um eine simultane Anpassung zwischen Repetitionsrate und Wellenlänge herbeizuführen. Diese Elemente lassen sich leicht in faseroptische Systeme integrieren und kommen mit einem Mindestmaß an Wartung aus. Insofern können kostengünstige und robuste Systeme auch für Anwendungen im "industriellen" Umfeld bereitgestellt werden.

In einer weiteren, vorteilhaften Ausgestaltung des Systems kann das zusätzliche optisch dispersive Element ein gechirptes Bragg-Gitter sein (engl. "chirped fiber bragg gratings", C-FBGs). Insbesondere die Verwendung gechirpter Bragg-Gitter als zusätzliches dispersives Element kann dazu beitragen, einen möglichst großen verstimmbaren Wellenlängenbereich zu erhalten. Zudem lassen sich diese Strukturen feinanpassen, sodass ein möglichst maximaler Überlapp von Pump- und Seedimpulsen erhalten wird. Ein weiterer Vorteil besteht darin, dass das beispielsweise verwendbare gechirpte Faser-Bragg-Gitter gleichzeitig als Auskoppelelement für die zu nutzende Strahlung aus dem Resonator verwendet werden kann. Es ist aber auch möglich, dass ein erfindungsgemäßer Pumpimpulsgenerator noch eine weitere Auskoppeleinheit aufweist. Eine mögliche Ausführungsform kann, wenn eine besonders hohe Kontrolle benötigt wird, auch kommerziell erhältliche thermisch fein-abstimmbare C-FBGs nutzen. Es können aber auch komplexere Temperaturprofile an das C-FBG angelegt werden.

In einem weiteren Aspekt des Systems kann die Änderung der Wellenlänge des Pumpimpulsgenerators über ein einstellbares spektrales Filter erfolgen. Neben der Möglichkeit der einfachen und direkten Auswahl der Wellenlänge besteht ein weiterer Vorteil darin, dass die Filterbandbreite hier maßgeblich die Impulseigenschaften des Pumpimpulsgenerators bestimmt (spektrale Breite und zeitliche Dauer sowie der zeitliche Chirp) und somit eine größere Kontrolle über die erzeugten Pumpimpulse gewonnen wird. Über die spektrale Breite und zeitliche Dauer der Pumpimpulse kann eine größere Kontrolle über die spektrale Breite und zeitliche Dauer der im parametrischen Verstärkungsmedium erzeugten Impulse gewonnen werden.

In einer Ausführungsform eines Pumpimpulsgenerators mit spektralem Filter können "saturable absorber mirrors" (SAM), z.B. in einer linearen Resonatorgeometrie, als passive Modenkopplungselemente, sowie schnell (<100 ms) verstimmbare optische Filter zum Einstellen der Wellenlänge und daran gekoppelt der Repetitionsrate genutzt werden. Hierfür kommen z.B. über piezoelektrische Effekte verstimmbare Fabry-Perot-Filter (z.B. fasergekoppelt), akusto-optische Filter, aber auch optische Gitter (z.B. in reflektiver Littrow-Anordnung) in Kombination mit schnellen Strahlablenkern in Betracht.

Eine weitere Ausführungsform kann eine aktive Modenkopplung nutzen. Zur Kontrolle der Repetitionsrate und daran gekoppelt auch der Emissionswellenlänge kann bevorzugt ein elektrooptischer Modulator, z.B. auf Basis von Lithium-Niobat, genutzt werden. Es können aber auch andere Modulationsverfahren, wie z.B. eine akusto-optische Modulation, genutzt werden.

In einer bevorzugten Ausführungsform des Systems kann zumindest ein Teil des zusätzlichen optisch dispersiven Elements außerhalb des Pumpimpulsgenerators angeordnet sein. Diese Ausgestaltung ermöglicht einen besonders flexiblen Aufbau und kann dazu beitragen, dass standard-wellenlängenverstimmbare Pumpimpulslaser genutzt werden können. Die erfindungsgemäße Kopplung zwischen Repetitionsrate und Wellenlänge erfolgt in diesem Fall dann ganz im oder vor dem optisch parametrischen Verstärkungsmedium. Dies kann die Kosten des Lasersystems reduzieren und Wartungsoperationen vereinfachen.

In einer bevorzugten Ausgestaltung des Systems beträgt die Repetitionsrate der Pumpimpulse ein ganzzahliges Vielfaches der Repetitionsrate der Seedimpulse. In dieser Ausgestaltung ist das zusätzlich optisch dispersive Element so gewählt, dass die Anpassung zwischen Repetitionsrate und Wellenlänge auf unterschiedliche Repetitionsraten von Pumpimpulsgenerator und Seedimpulsen ausgelegt ist. Diese Ausgestaltung weist die Besonderheit auf, dass die Repetitionsrate eines Leistungsanteils der Pumpimpulsstrahlung erst nach der Erzeugung im Generator auf die Repetitionsrate der Seedimpulse, z.B. mit einem elektrooptischen Modulator als sogenannter "Pulspicker", reduziert wird. Dies hat den Vorteil, dass der restliche Anteil der Pumpimpulse bei einer höheren Repetitionsrate dann erfindungsgemäß weiter zur Verfügung steht, was es ermöglicht das so erzeugte Licht direkt in Lock-In Detektionsverfahren, beispielsweise in der Detektion von kohärenter Ramanstreuung einzusetzen.

Weiterhin kann bevorzugt im System sowohl die parametrische Verstärkung als auch die Seedimpulserzeugung in einem optisch parametrischen Oszillator erfolgen (OPO). Bei der Nutzung eines OPOs zur Erzeugung der wellenlängenverschobenen Signal- und Idlerstrahlung wird die Seedstrahlung durch die Pumpimpulse im parametrischen Verstärkungsmedium in einem spontanen Prozess erzeugt und durch eine Rückkopplung mit den nächsten Pumpimpulsen überlagert. Diese Ausführung bietet den Vorteil einer kostengünstigen Realisierung, da keine externe Seedimpulserzeugung benötigt wird. Des Weiteren kann durch die zusätzliche Überhöhung der Seedimpulsenergie das System besonders effizient betrieben werden.

In einer weiteren Ausführungsform des Systems können die Seedimpulse aus einem Anteil der Pumpimpulse erzeugt und diese Seedimpulse vor der Überlagerung mit den Pumpimpulsen im parametrischen Verstärkungsmedium um das Inverse der Repetitionsrate der Pumpimpulse zeitlich verzögert werden. Dieser Aufbau ermöglicht die separate Erzeugung der Seedimpulse vor der Verstärkung dieser im parametrischen Verstärkungsmedium. Diese Verwendung eines OPA, also der Verstärkung im Einfachdurchlauf, reduziert die Komplexität des Gesamtsystems. Ein weiterer Vorteil dieser Ausgestaltung liegt in der Möglichkeit besonders effiziente Seedimpulserzeugungsmechanismen, die aus anderen Bereichen der nichtlinearen Photonik bekannt sind, zu nutzen, wie beispielsweise die spektrale Verbreiterung durch Selbstphasenmodulation, Supercontinuumserzeugung oder Soliton-Selbstfrequenz-Verschiebung durch stimulierte Ramanstreuung.

In einer zusätzlichen Charakteristik des Systems kann die Repetitionsrate des Pumpimpulsgenerators größer oder gleich 5 MHz und kleiner oder gleich 80 MHz und die Gruppengeschwindigkeitsdispersion des zusätzlichen optisch dispersiven Elements kleiner oder gleich 15 $ps^2$ und größer oder gleich 0,5 $ps^2$ sein. Innerhalb dieser Parameterbereiche lässt sich eine besonders effiziente Kopplung zwischen Repetitionsrate und Wellenlänge durch sehr stabile und kommerziell erhältliche C-FBGs erreichen. Dadurch wird ein besonders weit durchstimmbarer Laser erhalten, welcher sehr schnell nach Wellenlängenänderung auf seine ursprüngliche Leistung zurückkehrt. Dies ermöglicht insbesondere einen Einsatz in modernen spektroskopischen Methoden, insbesondere auch zur Untersuchung biologischer Systeme. Hier sind Lasersysteme mit Repetitionsraten zwischen 5 und 80 MHz von besonderem Vorteil, da sie einen effizienten Kompromiss zwischen hoher Signalausbeute und geringer Wahrscheinlichkeit der Schädigung biologischer Zellen aufweisen. Größere Dispersionen oder Gruppengeschwindigkeitsdispersionen können nachteilig sein, da die dafür notwendigen dispersiven Elemente sehr aufwendig und nur kostenintensiv zu fertigen sind. Zusätzlich sind diese Elemente in der Regel z.B. gegenüber Temperaturschwankungen sehr anfällig. Kleinere Dispersionen oder Gruppengeschwindigkeitsdispersionen können nachteilig sein, da der relative Fehler bei der Fertigung von gechirpten Bragg-Strukturen mit geringer Dispersion immer größer wird. Dies kann dazu führen, dass der durch die Kopplung von Wellenlänge und Repetitionsrate erreichte zeitliche Überlapp immer geringer wird und damit die gewünschte Erzeugung der verstimmbaren Wellenlängen ineffizienter wird bzw. nicht mehr möglich ist.

In einem weiteren Aspekt können zwischen Pumpimpulsgenerator und parametrischem Verstärkungsmedium faserbasierte optische Verstärker zum Einsatz kommen. Diese können aus mehreren Stufen bestehen und zum Beispiel als Einmoden-Vor- und Hauptverstärker mit gro-ßem Faserkern, also einer so genannten "Large-Mode Area"-Faser, ausgeführt sein, wobei die Verstärkerfaser beispielsweise als Ytterbium-dotierte polarisationserhaltende Glasfaser ausgeführt sein kann.

In einer weiteren Ausgestaltung kann der "Chirp" der Pumpimpulse gezielt eingestellt werden, um eine breitere oder respektive schmalere instantane Verstärkungsbandbreite zentriert um das Verstärkungsmaximum zu erreichen. Weiterhin kann es insbesondere im Falle der Verwendung von spektral breitbandigen und somit bandbreitenlimitiert sehr kurzen Pumpimpulsen (z.B. < 10 ps) vorteilhaft sein, diese vor der Zuführung zum parametrischen Verstärkungsmedium zu strecken ("gechirpt"), um z.B. störende nichtlineare Effekte wie Selbstphasenmodulation, zu reduzieren.

In einer zusätzlichen Ausführungsform kann der Faserlaser vollständig in Glasfasertechnik, im Besonderen aus polarisationserhaltenden Glasfasern, aufgebaut sein.

Des Weiteren erfindungsgemäß ist ein Verfahren zur Änderung der Wellenlänge von Laserimpulsen unter Verwendung eines optisch parametrischen Verstärkungsmediums, welches mindestens die Schritte umfasst

a) Erzeugen von Pumpimpulsen mit definierter Wellenlänge und definierter Repetitionsrate,
b) Erzeugen von Seedimpulsen,

c) Überlagern der Seed- und Pumpimpulse im optisch parametrischen Verstärkungsmedium, dadurch gekennzeichnet, dass bei einer Änderung der Wellenlänge oder bei der Änderung der Repetitionsrate des Pumpimpulses sich der jeweils andere Parameter gleichzeitig so ändert, dass eine zeitliche Überlappung der Pump- und der Seedimpulse im optisch parametrischen Verstärkungsmedium gewährleistet wird. Mittels des erfindungsgemäßen Verfahrens lassen sich schnelle Änderungen der Ausgangswellenlänge des optisch parametrischen Verstärkungsmediums erreichen, wobei insbesondere die maximale Ausgangsintensität der Impulse nach einer Wellenlängenänderung wieder sehr schnell erreicht wird. Das Verfahren eignet sich insofern für spektroskopische Anwendungen, welche auf flexible Untersuchungswellenlängen bei möglichst konstanter Ausgangsleistung angewiesen sind. Die bisherigen Laserverfahren, welche unterschiedliche Ausgangswellenlängen bereitstellen können, erreichen eine konstante Ausgangsleistung nur auf Kosten längerer Umschaltzeiten. Diese sind dadurch bedingt, dass mehrere Parameter unabhängig und konsekutiv voneinander geändert und/oder mechanische Elemente verwendet werden müssen, welche eine deutlich höhere Ansprechzeit aufweisen. Die hier verwendeten Komponenten müssen nicht mechanisch ausgestaltet sein und ermöglichen im optimalen Fall eine Schaltzeit in der Größenordnung der elektrischen Schaltzeit der Komponenten.

Im Schritt a) des Verfahrens werden Pumpimpulse mit definierter Wellenlänge und definierter Repetitionsrate erzeugt. Dies beinhaltet, dass die Pumpimpulse durch ein spezifisches Wertepaar, nämlich Wellenlänge und Repetitionsrate, definiert sind. Dies bedeutet nicht, dass diese beiden Parameter fix sind in dem Sinne, dass Wellenlänge und Repetitionsrate nicht veränderbar sind. Die Erzeugung der definierten Pumpimpulse kann beispielsweise mittels der oben beschriebenen Pumpimpulsgeneratoren erfolgen.

Im Schritt b) werden Seedimpulse erzeugt. Dieser Schritt kann beispielsweise über einen separaten Seedimpulsgenerator erfolgen oder aber auch durch Auskopplung und ggf. Aufbereitung eines Teiles der Pumpimpulse.

Im Schritt c) werden die Seed- und Pumpimpulse im optisch parametrischen Verstärkungsmedium überlagert. Dies kann beispielsweise durch gleichzeitiges Einspeisen der beiden Impulse in das Verstärkungsmedium erfolgen. Eine Überlagerung erfolgt erfindungsgemäß dann, wenn innerhalb desselben Zeitintervalls sowohl Pump- als auch Seedimpulse einen gemeinsamen Beitrag zu der Leistung der Ausgangsimpulse des Lasersystems leisten.

Das Verfahren ist derart ausgestaltet, dass bei einer Änderung der Wellenlänge oder bei einer Änderung der Repetitionsrate der Pumpimpulse sich der jeweils andere Parameter gleichzeitig ändert. Innerhalb des erfindungsgemäßen Verfahrens werden also die beiden Parameter Wellenlänge und Repetitionsrate nicht als weitgehend unabhängig voneinander betrachtet, sondern es erfolgt eine gezielte Einstellung des einen bei der Änderung des anderen Parameters. Dies steht im Gegensatz zu Verfahren des Standes der Technik, welche auf eine gezielte Kopplung beider Parameter verzichten.

In einer bevorzugten Ausgestaltung des Verfahrens kann die gleichzeitige Änderung von Wellenlänge und Repetitionsrate der Pumpimpulse mittels eines dispersiven Elementes erfolgen. Die weiter oben beschriebenen dispersiven Elemente sind in der Lage eine schnelle und effiziente Kopplung zwischen Repetitionsrate und Wellenlänge des Pumpimpulslasers zu gewährleisten. Somit können weit durchstimmbare und schnell schaltbare Verfahren ermöglicht werden.

Innerhalb eines weiteren Aspektes des Verfahrens kann die Änderung der Wellenlänge der Laserimpulse durch eine gleichzeitige Variation von Pumpimpuls-Wellenlänge und - Repetitionsrate innerhalb von kleiner oder gleich 100 ms erfolgen. Das Verfahren ermöglicht über die simultane Kopplung zwischen Repetitionsrate und Wellenlänge ein schnelles Erreichen der erwünschten Ausgangsleistung nach einer Wellenlängenänderung unter Verzicht auf mechanische Komponenten. Insofern können Schaltzeiten realisiert werden, welche mit den bisher bekannten Verfahren nicht möglich waren.

Die vorgenannten sowie beanspruchten und in den Ausführungsbeispielen beschriebenen erfindungsgemäß zu verwendenden Bauteile unterliegen in ihrer Größe, Form, Gestaltung, Materialauswahl und technischen Konzeptionen keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der - beispielhaft - mehrere bevorzugte Ausführungsbeispiele des erfindungsgemäßen Konzeptes dargestellt sind.

Es zeigt die

**Fig. 1** ein System zum Erzeugen von Ausgangslaserimpulsen mit einer abstimmbaren Wellenlänge, basierend auf einer parametrischen Verstärkung gemäß einem bevorzugten Ausführungsbeispiel der Erfindung in Form eines Pumpimpulsgenerators (9), eines Verstärkers (10) und eines faserbasierten OPOs;

Fig. 2 ein weiteres System zum Erzeugen von Ausgangslaserimpulsen mit einer abstimmbaren Wellenlänge, basierend auf einer parametrischen Verstärkung gemäß einem bevorzugten Ausführungsbeispiel der Erfindung in Form eines Pumpimpulsgenerators, eines Verstärkers und eines faserbasierten OPAs;

**Fig. 3** ein Pumpimpulsgenerator mit geeigneter Kopplung von Repetitionsrate an die Wellenlänge gemäß einem bevorzugten Ausführungsbeispiel der Erfindung;

**Fig. 4** ein weiterer Pumpimpulsgenerator mit geeigneter Kopplung von Repetitionsrate an die Wellenlänge gemäß einem bevorzugten Ausführungsbeispiel der Erfindung;

**Fig. 5** ein weiterer Pumpimpulsgenerator mit geeigneter Kopplung von Repetitionsrate an die Wellenlänge gemäß einem bevorzugten Ausführungsbeispiel der Erfindung;

**Fig. 6** beispielhaft die Änderung der Repetitionsrate eines Ytterbium-Master-Oszillators (Yb-MO, gestrichelte Linie) bei der Änderung der Wellenlänge im Vergleich zur benötigten Repetitionsrate zum Pumpen eines FOPOs basierend auf einer kommerziellen photonischen Kristallfaser (gepunktete Linie). Gezeigt ist ebenfalls die sich ergebende Repetitionsratenänderung bei der Dispersionsanpassung eines Yb-MO mit einem chirped fiber bragg grating C-FBG (durchgezogene Linie);

**Fig. 7** eine experimentelle Umsetzung der geeigneten Kopplung von Repetitionsrate an die Wellenlänge. Gezeigt sind die theoretischen Kurven aus Abb. 6 (Yb-Mo-CFBG durchgezogene Linie, Yb-Mo gestrichelte Linie) und die experimentell gemessenen Werte eines Yb-Mo mit einem C-FBG im Resonator (Kreuze);

**Fig. 8** beispielhaft die Abstimmungskurve eines FOPOs (Signal- und Idlerwellenlänge in Abhängigkeit der zentralen Pumpwellenlänge) realisiert mit einer kommerziellen photonischen Kristallfaser (NKT-Photonics LMA5). Die durchgezogenen Linien zeigen den theoretischen Verlauf und die Kreuze die experimentell erreichten Werte. Die Abstimmung erfolgte rein durch elektronisches Verstimmen eines Filters im Pumpimpulsgenerator; bei einem gewöhnlichen FOPO hätte die Resonatorlänge durch eine Verzögerungsschiene mechanisch um 10.8 cm verändert werden müssen;

**Fig. 9** die Abhängigkeit des zeitlichen Überlapps in einem FOPA von Pumpimpuls und einem "gechirpten" Seedimpuls von der Repetitionsrate $f_{r1}$ in a) und $f_{r2}$ in b), wenn der Seedimpuls durch einen vorangegangenen Pumpimpuls erzeugt und um eine feste Zeit $\tau$ zu diesem verzögert wird.

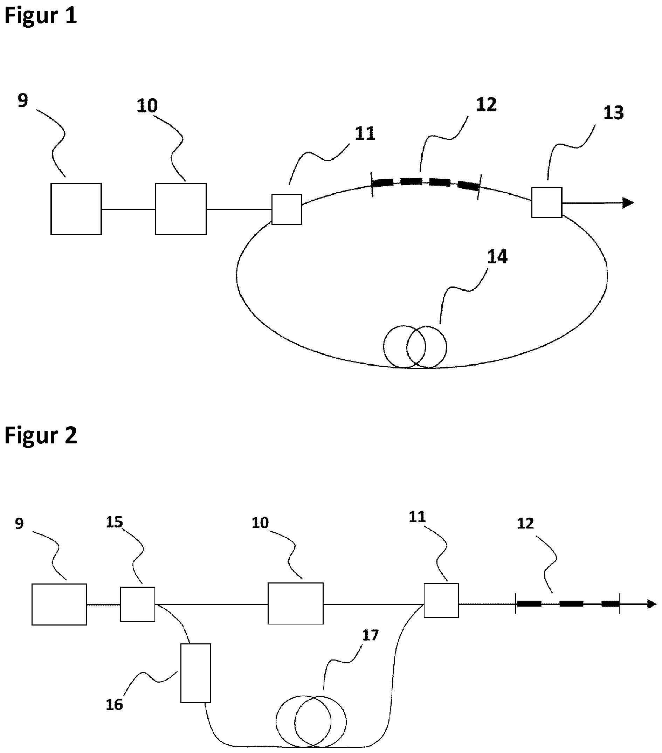

Die **Figur 1** zeigt eine bevorzugte Ausführung des Lasersystems. Der Pumpimpulsgenerator (9) wird mittels einer optischen Verstärkerkette (10) auf die benötigte Spitzenleistung (z.B. 1 kW) gebracht, bevor dessen Ausgangsstrahl in den FOPO gekoppelt wird. Die Pumpimpulse werden über einen WDM-Koppler (11) in einer parametrischen Verstärkerfaser (12) mit Seedimpulsen überlagert. Die verstärkten Impulse (Signal, Idler oder bevorzugter Weise sogar beide, sowie eventuell auch die verbleibenden Pumpimpulse) werden über einen faserbasierten Koppler (13) ausgekoppelt (z.B. zu 80%) und der Rest wird über eine Rückkoppelfaser (14) zurückgeführt.

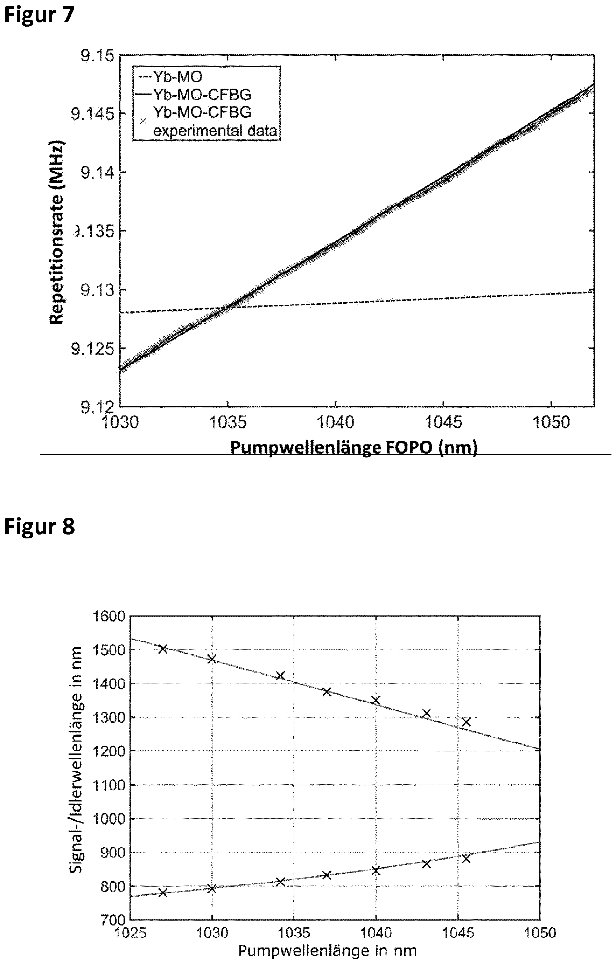

Die **Figur 2** zeigt eine weitere bevorzugte Ausführung des Lasersystems basierend auf einem OPA. Die im Pumpimpulsgenerator (9) dispersionsangepasst erzeugten Impulse werden mit Hilfe eines Kopplers (15) in einen Arm zur Pumpimpulsverstärkung (mit Faserverstärkerkette (10)) und einen Arm zur Seedimpulserzeugung aufgeteilt. Der Seedimpuls wird bevorzugter Weise durch Superkontinuumserzeugung (16), ggf. unter Verwendung optischer Verstärker, erzeugt. Andere Methoden der Seedimpulserzeugung, wie z.B. stimulierte Ramanstreuung, sind ebenfalls möglich. Der Seedimpuls wird über eine Verzögerungsfaser (17) und einen WDM-Koppler (11) mit einem im Pumpimpulszug nachfolgenden Pumpimpuls überlagert und dann in einer parametrischen Verstärkerfaser (12) verstärkt. Die Kopplung der Repetitionsrate des Pumpimpulses an die Wellenlänge des Pumpimpulses ist passend zur Dispersion im Seedarm gewählt (vgl. Figur 8) unter zusätzlicher Berücksichtigung der Dispersion, die auf die Pumpimpulse im Verstärkerarm (10) wirkt. Im Vergleich zu dem FOPO in der Figur 1 nimmt der gesamte Seederzeugungsarm nach Abspaltung des Pumpimpulses die Rolle des FOPO-Resonators ein, und die Dispersion des gesamten Pumpimpulsverstärkungsarms muss zur Dispersion innerhalb des Pumpimpulsgenerators hinzugerechnet werden.

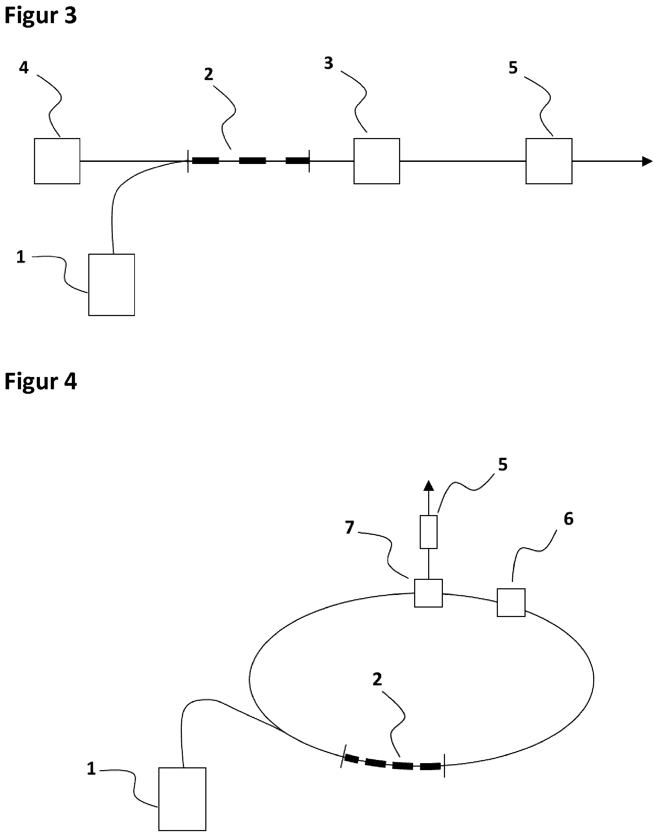

Die **Figur 3** zeigt schematisch einen passiv modengekoppelten Faserlaser als Pumpimpulsgenerator zur Verwendung in dem erfindungsgemäßen System. Der Faserlaser kann vollständig in Glasfasertechnik, im Besonderen aus polarisationserhaltenden Glasfasern, aufgebaut sein und wird von einer fasergekoppelten Pumpdiode (1) gepumpt, die für die Verstärkung in der dick gestrichelt dargestellt aktiv dotierten Verstärkerfaser (2) sorgt. Die Verstärkerfaser kann beispielsweise als Ytterbium-dotierte polarisationserhaltende Glasfaser ausgeführt sein. Innerhalb des Resonators kann ein elektronisch abstimmbarer Bandpassfilter (3) zum Einsatz kommen, welcher zur Kontrolle der emittierten Wellenlänge dient. Der eingesetzte sättigbare Absorberspiegel (4) ist bevorzugt direkt auf eine Glasfaser aufgebracht. Der zweite Endspiegel in dem Linearresonator wird durch das "gechirpte" Faser-Bragg-Gitter (5) gebildet, das auch gleichzeitig als Auskoppelelement dient. Das dispersive Element (5) prägt dem umlaufenden Laserlicht einen Großteil der Gesamtdispersion im Resonator auf und sorgt damit für eine stark wellenlängenabhängige Umlaufzeit. Auf diesem Weg kann die Kopplung der Repetitionsrate an die vorgegebene Wellenlänge gesteuert werden.

Die **Figur 4** zeigt eine weitere Version eines erfindungsgemäßen Lasersystems, welches aktive Modenkopplung einsetzt. Der Ringresonator kann aus polarisationserhaltender Glasfaser bestehen. Das Starten der Modenkopplung und die Kontrolle der Repetitionsrate erfolgen über einen elektrooptischen Modulator (6). Die Dispersion des Faserresonators wird durch ein C-FBG (5) eingestellt, das zugleich als Auskoppelspiegel dienen kann. Alternativ kann ein zusätzlicher Koppler in den Resonator eingebaut werden. Um das reflektive C-FBG in einem Ringresonator einzusetzen wird auf einen Zirkulator (7) zurückgegriffen.

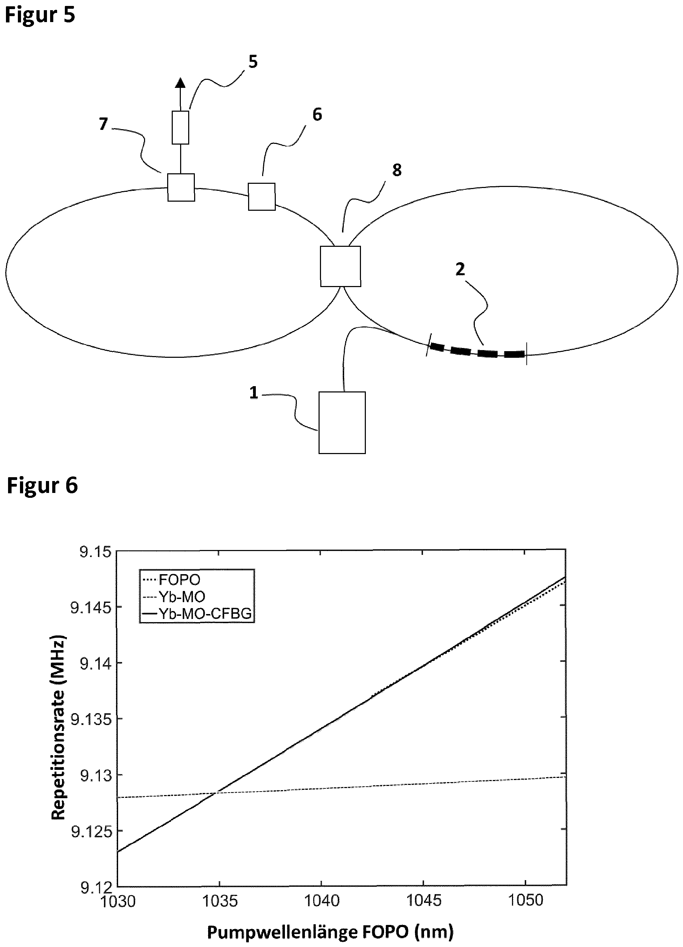

Die **Figur 5** zeigt eine weitere Ausgestaltung eines möglichen Pumpimpulsgenerators, welcher künstliche passive Modenkopplung einsetzt, um die emittierte Pulsdauer zu verkürzen (z.B. unter 50 ps oder unter 10 ps bei Repetitionsraten von z.B. 50 MHz oder 10 MHz). Der zu diesem Zweck eingesetzte "nonlinear amplifying loop mirror" (NALM) besteht aus einer durch die Pumpdiode (1) gepumpte Verstärkerfaser (2) aus passiver polarisationserhaltender Glasfaser. Er ist mit dem eigentlichen Resonatorring durch einen faserbasierten Koppler (8) verbunden. Der Koppler kann bevorzugterweise für ein asymmetrisches Teilungsverhältnis (z.B. 45/55%) sorgen. Die Kontrolle der Wellenlänge kann über ein elektronisch abstimmbares Bandpassfilter erfolgen. Der eingesetzte Zirkulator (7) sorgt hier zusätzlich für eine Umlaufrichtung im linken Faserring im Uhrzeigersinn und blockt vom NALM reflektierte Lichtanteile. Die Dispersion des Faserresonators wird erneut durch ein C-FBG (5) eingestellt. Es kann vorteilhaft sein, auch im Hauptring des Resonators eine Verstärkerfaser mit eigener Pumpdiode einzusetzen, um z.B. die Leistung im Resonator unabhängig von der Verstärkung im NALM anzupassen.

Die **Figur 6** zeigt beispielhaft eine theoretische Berechnung der Anpassung der Resonatordispersion eines aktiv-modengekoppelten Pumpimpulsgenerators (Yb-MO) gemäß der Erfindung zur Sicherstellung von gleichzeitig vorliegender Verstärkung und zeitlichem Überlapp in einem FOPO-Resonator aus einer 50 cm langen parametrischen Verstärker- (LMA-PM-5) und Rückkoppelglasfaser (PM-980). Aufgetragen ist auf der X-Achse die Pumpwellenlänge gegen die Repetitionsrate. Ein typischer aktiv-modengekoppelter Ytterbium-Faserlaser mit einer Repetitionsrate von etwa 10 MHz ändert auf Grund der Dispersion gewöhnlich verwendeter Glasfasern seine Repetitionsrate um lediglich <5 kHz bei einer Änderung der Pumpimpulswellenlänge von 1020 nm auf 1050 nm. Die den Pumpimpulswellenlängen entsprechenden Signalwellenlängen bei der maximalen parametrischen Verstärkung (im Bereich von ca. 750 nm bis ca. 950 nm) weisen jedoch um etwa 40 kHz unterschiedliche Repetitionsraten in einem FOPO basierend auf einer parametrischen Verstärkerfaser (LMA-PM-5) und einer Rücckoppelfaser (PM-980) auf (Kurve mit der Bezeichnung FOPO). Die Verwendung eines zusätzlichen dispersiven Elementes in Form eines C-FBG mit $\beta_2$ = + 6.91 ps$^2$ und $\beta_3$ = - 0.018 ps$^3$ im Pumpimpulsgenerator bewirkt eine Anpassung der Repetitionsrate im Pumpimpulsgenerator, gezeigt durch die durchgezogene Linie, und gewährleistet so einen zeitlichen Überlapp von Seed- und Pumpimpulsen in der parametrischen Verstärkerfaser bei einer Änderung der Pumpwellenlänge.

Die **Figur 7** zeigt eine experimentelle Umsetzung des in Bild 6 dargestellten Szenarios. Aufgetragen ist auf der X-Achse die Pumpwellenlänge gegen die theoretisch berechnete Repetitionsrate für einen Yb-MO und einen mit Hilfe eines C-FBG mit $\beta_2$= + 6.91 ps$^2$, $\beta_3$ = - 0.018 ps$^3$ angepassten Yb-MO. Die Kreuze zeigen die gemessene Repetitionsrate einer Ausführungsform eines solchen angepassten Pumpimpulsgenerators in Abhängigkeit der elektronischen Verstimmung der Wellenlänge.

Die **Figur 8** zeigt beispielhaft die Abstimmkurve eines FOPOs basierend auf einer kommerziellen photonischen Kristallfaser (LMA-PM-5) und einem erfindungsgemäß angepassten Pumpimpulsgenerator (Anpassungsergebnis ist in der Figur 7 beschrieben). Zur Abstimmung wurde lediglich elektronisch die Wellenlänge der Pumpimpulse verstimmt. Es fand keine mechanische (Nach-)Justage oder Längenanpassung des Systems statt. Aufgetragen sind die elektronisch eingestellte Wellenlänge des Pumpimpulsgenerators auf der X-Achse und die Wellenlängen der Signal- und Idlerstrahlung auf der Y-Achse. Die durchgezogenen Linien zeigen den theoretisch erwarteten Verlauf und die Kreuze die experimentell erreichten Ergebnisse. Bei der verwendeten Repetitionsrate des Pumplasers hätte in einem gewöhnlichen FOPO-System entweder die Länge des FOPOs oder die des Pumplaserresonators um ca. 10.8 cm während des Abstimmvorgangs geändert werden müssen, also z.B. über das mechanische Verfahren einer Verzögerungsschiene um 5.4 cm.

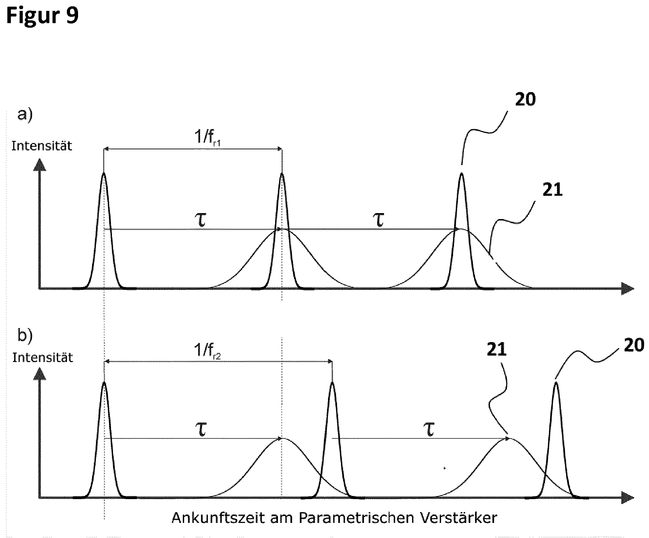

Die **Figur 9** zeigt beispielhaft und schematisch in einem "delayed-FOPA" die Abhängigkeit des zeitlichen Überlapps der Pump- (20) und Seedimpulse (21) von der Repetitionsrate. In diesem Schema wurden breitbandige und stark gechirpte Seedimpulse (21) durch einen vorangegangenen Pumpimpuls (20) erzeugt und haben eine zusätzliche, aber repetitionsratenunabhängige Verzögerung $\tau$ erfahren (z.B. durch den Seederzeugungsarm in Fig. 2). Die durch die Dispersion gestreckten Seedimpulse (21) werden nun mit den folgenden Pumpimpulsen (20) überlagert. Ändert sich die Repetitionsrate der Pumpimpulse (20) von fr1 zu fr2, so ändert sich der Zeitpunkt (relativ zu den vorangegangenen Pumpimpulsen (20)) des Eintreffens der nachfolgenden Impulse im Verstärkungsmedium, nicht aber der Zeitpunkt des Eintreffens der Seedimpulse (21). Die Repetitionsrate legt also den zeitlichen Überlapp zwischen gechirpten Seedimpulsen (21) und den Pumpimpulsen (20) fest.

Bezugszeichenliste

| | |
|---|---|
| 1 | Pumpdiode |
| 2 | Verstärkerfaser |
| 3 | Elektronisch abstimmbares spektrales Filter |
| 4 | Sättigbarer Absorberspiegel |
| 5 | gechirptes Bragg-Gitter |
| 6 | Modulator |
| 7 | Zirkulator |
| 8 | Koppler |
| 9 | Pumpimpulsgenerator (dispersionsangepasst) |
| 10 | Optischer Faserverstärker |
| 11 | WDM-Koppler |
| 12 | Parametrische Verstärkerfaser |
| 13 | Auskoppler |
| 14 | Rückkoppelfaser |
| 15 | Koppler |
| 16 | Seedimpulserzeugung |
| 17 | Verzögerungsfaser |
| 20 | Pumpimpuls |
| 21 | Seedimpuls |

**Patentansprüche**

1. System zur Erzeugung von Laserimpulsen variabler Wellenlänge, mindestens umfassend

   - einen Pumpimpulsgenerator (9) zur Erzeugung von Pumpimpulsen (20) und
   - ein durch den Pumpimpulsgenerator (9) gepumptes, optisch parametrisches Verstärkungsmedium, welches einfallende Pumpimpulse (20), stimuliert durch weitere Seedimpulse (21), in wellenlängenverschobene Signal- und Idlerimpulse umwandelt,

   **dadurch gekennzeichnet, dass**

   das System weiter ein optisch dispersives (5) Element umfasst,
   die Wellenlänge der Pumpimpulse (20) entweder als solche oder aber auch über die Repetitionsrate des Pumpimpulsgenerators (9) einstellbar ist und bei einer Änderung entweder der Repetitionsrate oder der Wellenlänge sich der jeweils andere Parameter mittels des optisch dispersiven Elements (5) gleichzeitig so ändert, dass Pump- und Seedimpulse (20, 21) im optisch parametrischen Verstärkungsmedium zeitlich überlappen.

2. System nach Anspruch 1, wobei das optisch dispersive Element (5) ausgewählt ist aus der Gruppe bestehend aus gechirpten Bragg-Strukturen, Gitter, Prismen oder Kombinationen daraus.

3. System nach Anspruch 1 oder 2, wobei das optisch dispersive Element (5) ein gechirptes Bragg-Gitter ist.

4. System nach einem der Ansprüche 1 bis 3, wobei die Änderung der Wellenlänge des Pumpimpulsgenerators (9) über ein einstellbares spektrales Filter (3) erfolgt.

5. System nach einem der Ansprüche 1 bis 4, wobei zumindest ein Teil des optisch dispersiven Elements (5) außerhalb des Pumpimpulsgenerators (9) angeordnet ist.

6. System nach einem der Ansprüche 1 bis 5, wobei die Repetitionsrate des Pumpimpulsgenerators (9) ein ganzzahliges Vielfaches der Repetitionsrate der Seedimpulse (21) beträgt.

7. System nach einem der Ansprüche 1 bis 6, wobei sowohl die parametrische Verstärkung als auch die Seedimpulserzeugung in einem optisch parametrischen Oszillator (OPO) erfolgt.

8. System nach einem der Ansprüche 1 bis 7, wobei die parametrische Verstärkung in einem optisch parametrischen Verstärker (OPA) erfolgt, die Seedimpulse (21) aus einem Anteil der Pumpimpulse (20) erzeugt und diese Seedimpulse (21) vor der Überlagerung mit den Pumpimpulsen (20) um das Inverse der Repetitionsrate der Pumpimpulse (20) zeitlich verzögert und somit mit einem aus dem Pumpimpulszug nachfolgenden Pumpimpuls (20) überlagert werden.

9. System nach einem der Ansprüche 1 bis 8, wobei die Repetitionsrate des Pumpimpulsgenerators größer oder gleich 5 MHz und kleiner oder gleich 80 MHz und die Gruppengeschwindigkeitsdispersion des optisch dispersiven Elements (5) kleiner oder gleich 15 ps2 und größer oder gleich 0,5 ps2 ist.

10. Verfahren zur Änderung der Wellenlänge von Laserimpulsen unter Verwendung eines optisch parametrischen Verstärkungsmediums mindestens umfassend die Schritte

   a) Erzeugen von Pumpimpulsen (20) mit definierter Wellenlänge und definierter Repetitionsrate,
   b) Erzeugen von Seedimpulsen (21),
   c) Überlagern der Seed- und Pumpimpulse (21, 20) im optisch parametrischen Verstärkungsmedium,

   **dadurch gekennzeichnet, dass**
   bei einer Änderung der Wellenlänge oder bei der Änderung der Repetitionsrate des Pumpimpulses (20) sich der jeweils andere Parameter mittels einer optischen Dispersion gleichzeitig so ändert, dass eine zeitliche Überlappung der Pump- und der Seedimpulse (20, 21) im optisch parametrischen Verstärkungsmedium gewährleistet wird, wobei die gleichzeitige Änderung von Wellenlänge und Repetitionsrate der Pumpimpulse (20) mittels eines dispersiven Elements (5) erfolgt.

11. Verfahren nach Anspruch 10, wobei die gleichzeitige Änderung von Wellenlänge und Repetitionsrate der Pumpimpulse (20) mittels eines dispersiven Elementes (5) erfolgt.

12. Verfahren nach einem der Ansprüche 10 oder 11, wobei die Änderung der Wellenlänge der Laserimpulse durch eine gleichzeitige Variation von Pumpimpuls-Wellenlänge und - Repetitionsrate innerhalb von kleiner oder gleich 100 ms erfolgt.


**Claims**

1. A system for generating laser pulses of variable wavelength, comprising at least

   - a pump pulse generator (9) for generating pump pulses (20) and
   - an optical parametric gain medium pumped by the pump pulse generator (9), which converts incoming pump pulses (20), stimulated by further seed pulses (21), into wavelength-shifted signal pulses and wavelength-shifted idler pulses,

   **characterized in that**

   the system further comprises an optically dispersive element (5),
   the wavelength of the pump pulses (20) is adjustable either as such or via the repetition rate of the pump pulse generator (9), and when either the repetition rate or the wavelength is changed, the other parameter changes simultaneously by means of the optically dispersive element (5) in such a way that the pump pulses (20) and the seed pulses (21) in the optical parametric gain medium overlap in time.

2. The system according to claim 1, wherein the optically dispersive element (5) is selected from the group consisting of chirped Bragg structures, gratings, prisms or combinations thereof.

3. The system according to claim 1 or 2, wherein the optically dispersive element (5) is a chirped Bragg grating.

4. The system according to one of the claims 1 to 3, where the change of the wavelength of the pump pulse generator (9) is done by an adjustable spectral filter.

5. The system according to one of claims 1 to 4, wherein at least a part of the optically dispersive element (5) is arranged outside the pump pulse generator (9).

6. The system according to one of claims 1 to 5, wherein the repetition rate of the pump pulse generator (9) is an integer multiple of the repetition rate of the seed pulses (21).

7. The system according to one of claims 1 to 6, wherein both the parametric amplification and the seed pulse generation are performed in an optical parametric oscillator (OPO).

8. The system according to one of claims 1 to 7, wherein the parametric amplification is carried out in an optical parametric amplifier (OPA), the seed pulses (21) are generated from a portion of the pump pulses (20) and these seed pulses (21) are delayed in time by the inverse of the repetition rate of the pump pulses (20) before being superimposed with the pump pulses (20) and are thus superimposed with a pump pulse (20) following from the pump pulse train.

9. The system according to one of claims 1 to 8, wherein the repetition rate of the pump pulse generator (9) is greater than or equal to 5 MHz and less than or equal to 80 MHz and the group velocity dispersion of the optically dispersive element (5) is less than or equal to 15 ps2 and greater than or equal to 0.5 ps2.

10. A method for changing the wavelength of laser pulses using an optical parametric gain medium, at least comprising the steps of

   a) generating pump pulses (20) with defined wavelength and defined repetition rate,
   b) generating seed pulses (21),
   c) superposing the seed pulses (21) and pump pulses (20) in the optical parametric gain medium,

   **characterized in that** when the wavelength or the repetition rate of the pump pulse (20) changes, the other parameter changes simultaneously by means of an optical dispersion in such a way that an overlap in time of the pump pulses (20) and seed pulses (21) in the optical parametric gain medium is ensured, wherein the simultaneous change of wavelength and repetition rate of the pump pulses (20) is effected by means of a dispersive element (5).

11. The method according to claim 10, wherein the simultaneous change of wavelength and repetition rate of the pump pulses (20) is effected by means of a dispersive element (5).

12. The method according to one of claims 10 or 11, wherein the change in wavelength of the laser pulses is effected by a simultaneous variation of pump pulse wavelength and repetition rate within less than or equal to 100 ms.


**Revendications**

1. Système de génération d'impulsions laser de longueur d'onde variable, comprenant au moins

   - un générateur d'impulsion de pompe (9) pour générer des impulsions de pompe (20) et
   - un milieu à amplification paramétrique optique pompé par le générateur d'impulsion de pompe (9), qui convertit des impulsions de pompe entrantes (20), stimulées par d'autres impulsions d'amorçage (21), en impulsions de signal décalées en longueur d'onde et en impulsions complémentaires décalées en longueur d'onde,

   **caractérisé par le fait que**

   le système comprend en outre un élément optiquement dispersif (5),
   la longueur d'onde des impulsions de pompe (20) est réglable en tant que telle ou par l'intermédiaire de la fréquence de répétition du générateur d'impulsion de pompe (9) et lorsque la fréquence de répétition ou la longueur d'onde est modifiée, l'autre paramètre est modifié simultanément au moyen de l'élément optiquement dispersif (5) de manière à ce que les impulsions de pompe (20) et les impulsions d'amorçage (21) dans le milieu à amplification paramétrique optique se chevauchent dans le temps.

2. Système selon la revendication 1, dans lequel l'élément optiquement dispersif (5) est choisi dans le groupe constitué de structures de Bragg chirpées, de réseaux, de prismes ou de combinaisons de ceux-ci.

3. Système selon la revendication 1 ou 2, dans lequel l'élément optiquement dispersif (5) est un réseau de Bragg chirpé.

4. Système selon l'une quelconque des revendications 1 à 3, dans lequel la modification de la longueur d'onde du générateur d'impulsion de pompe (9) est effectuée par un filtre spectral réglable (3).

5. Système selon l'une quelconque des revendications 1 à 4, dans lequel au moins une partie de l'élément optiquement dispersif (5) est disposée à l'extérieur du générateur d'impulsion de pompe (9).

6. Système selon l'une quelconque des revendications 1 à 5, dans lequel la fréquence de répétition du générateur d'impulsion de pompe (9) est un multiple entier de la fréquence de répétition des impulsions d'amorçage (21).

7. Système selon l'une quelconque des revendications 1 à 6, dans lequel l'amplification paramétrique et la génération d'impulsions d'amorçage sont réalisées dans un oscillateur paramétrique optique (OPO).

8. Système selon l'une quelconque des revendications 1 à 7, dans lequel l'amplification paramétrique est réalisée dans un amplificateur paramétrique optique (OPA), les impulsions d'amorçage (21) sont générées à partir d'une partie des impulsions de pompe (20) et ces impulsions d'amorçage (21) sont retardées dans le temps de l'inverse de la fréquence de répétition des impulsions de pompe (20) avant d'être superposées aux impulsions de pompe (20) et sont ainsi superposées à une impulsion de pompe (20) qui suit le train d'impulsions de pompe.

9. Système selon l'une quelconque des revendications 1 à 8, dans lequel la fréquence de répétition du générateur d'impulsions de pompe (9) est supérieur ou égal à 5 MHz et inférieur ou égal à 80 MHz et la dispersion de vitesse de groupe de l'élément optiquement dispersif (5) est inférieure ou égale à 15 ps2 et supérieure ou égale à 0,5 ps2.

10. Procédé de modification de la longueur d'onde d'impulsions laser à l'aide d'un milieu à amplification paramétrique optique, comprenant au moins les étapes suivantes

   a) générer des impulsions de pompe (20) d'une longueur d'onde et d'une fréquence de répétition définies,
   b) générer des impulsions d'amorçage (21),
   c) superposer des impulsions d'amorçage (21) et des impulsions de pompe (20) dans le milieu à amplification paramétrique optique,

   **caractérisé par le fait que** lorsque la longueur d'onde ou la fréquence de répétition de l'impulsion de pompe (20) change, l'autre paramètre change simultanément au moyen d'une dispersion optique de manière à assurer un chevauchement dans le temps des impulsions de pompe (20) et des impulsions d'amorçage (21) dans le milieu à amplification paramétrique optique, la modification simultanée de la longueur d'onde et de la fréquence de répétition des impulsions de pompe (20) étant effectuée au moyen d'un élément dispersif (5).

11. Procédé selon la revendication 10, dans lequel la modification simultanée de la longueur d'onde et de la fréquence de répétition des impulsions de pompe (20) est effectuée au moyen d'un élément dispersif (5).

12. Procédé selon l'une des revendications 10 ou 11, dans lequel la modification de la longueur d'onde des impulsions laser est effectuée par une variation simultanée de la longueur d'onde et de la fréquence de répétition des impulsions de pompe dans un délai inférieur ou égal à 100 ms.

## Figur 1

## Figur 2

**Figur 3**

**Figur 4**

# Figur 5

# Figur 6

## Figur 7

## Figur 8

# Figur 9

a)

Intensität

$1/f_{r1}$

$\tau$      $\tau$

**20**

**21**

b)

Intensität

$1/f_{r2}$

$\tau$      $\tau$

**21**     **20**

Ankunftszeit am Parametrischen Verstärker

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SHENPING L. et al.** Electrical wavelength-tunable actively mode-locked fiber ring laser with a linearly chirped fiber Bragg grating. *IEEE Photonics Technology Letters,* 1998, vol. 10, 799-801
- **BRINKMANN, M. et al.** Electronically and rapidly tunable fiber-integrable optical parametric oscillator for nonlinear microscopy. *Optics Letters,* 2016, vol. 41, 2193

- **T. GOTTSCHALL et al.** Four-wave mixing based light sources for real-world biomedical applications of coherent Raman microscopy. *Proc. of SPIE,* 2016, vol. 9712, 971202